# EUROPEAN PATENT APPLICATION

(11) **EP 4 640 373 A1**
(43) Date of publication of application: **29.10.2025**
(21) Application number: 23906017.1
(22) Date of filing: 20.12.2023
(51) Int. Cl.: B24D 5/06

(54) **TRIMMING-FREE SPECIALLY SHAPED DIAMOND GRINDING WHEEL**

(30) Priority: 22.12.2022 CN 202211657393
(71) Applicant: GUILIN GRIND-ACADEMY MATERIAL TECHNOLOGY CO., LTD., Guangxi 541004 (CN); Guilin Champion Union Diamond Co., Ltd., Guilin, Guangxi 541004 (CN)
(72) Inventor: SONG, Jingxin, Guilin, Guangxi 541004 (CN); LIANG, Anning, Guilin, Guangxi 541004 (CN); LONG, Huiling, Guilin, Guangxi 541004 (CN); XIE, Mingxing, Guilin, Guangxi 541004 (CN); WANG, Zhiyong, Guilin, Guangxi 541004 (CN); SONG, Youpeng, Guilin, Guangxi 541004 (CN)
(74) Representative: Metida
(86) International application number: PCT/CN2023/140323
(87) International publication number: WO 2024/131856

(57) **Abstract**

The present invention relates to a trimming-free diamond profiled grinding wheel, including a grinding ring, wherein each of an upper end face and a lower end face of the grinding ring is provided with at least one end face separation groove, and each end face separation groove extends in a circumferential direction of the grinding ring. The present invention has the following beneficial effects: a simple structure and reasonable design are achieved; and the grinding wheel requires no truing or rework and can be used until complete depletion, thereby greatly prolonging the service life of the grinding wheel and reducing the cost. And the following problem can be effectively solved: for a powder metallurgy metal-bonded diamond profiled concave-type grinding wheel, a grinding zone will continuously wear down and reduce in diameter in its radial direction during use, forming a groove having the same thickness as a workpiece; and over time, upper and lower edges of this groove gradually cause interference-type scratching and grinding on upper and lower end faces of the workpiece, negatively affecting the edge grinding quality of the workpiece.

## Description

### TECHNICAL FIELD

The present invention relates to the technical field of grinding wheels and in particular to a trimming-free diamond profiled grinding wheel.

### BACKGROUND ART

Powder metallurgy metal-bonded diamond profiled concave-type grinding wheel mainly utilizes the contoured profile of its outer circumferential surface to machine specially-shaped edges. During use, a grinding zone of the grinding wheel continuously wears down and reduces in diameter in a radial direction, resulting the formation of a groove having the same thickness as a workpiece. Over time, upper and lower edges of this groove gradually cause interference-type scratching and grinding on upper and lower end faces of the workpiece, negatively affecting the edge grinding quality of the workpiece. In this case, the grinding wheel must undergo trimming to remove the upper and lower edges of the groove before it can be reused normally.

Since the trimming of the powder metallurgy metal-bonded diamond grinding wheel typically requires electrical discharge machining and users generally lack such facilities, the grinding wheel must be returned to the manufacturer for reprocessing. However, when return logistics prove cost-prohibitive, the users may choose to abandon the grinding wheel although there are generally still a large number of diamond working layers that can be used after processing. This will cause great waste, objectively presenting short service life of the grinding wheel and high tooling cost.

### SUMMARY OF THE INVENTION

The technical problem to be solved by the present invention is to provide a trimming-free diamond profiled grinding wheel, aiming to solve the problems in the prior art.

The technical solutions of the present invention to solve the above technical problems are as follows.

A trimming-free diamond profiled grinding wheel includes a grinding ring, wherein each of an upper end face and a lower end face of the grinding ring is provided with at least one end face separation groove, and each end face separation groove extends in a circumferential direction of the grinding ring.

The present invention has the following beneficial effects. During operation, a grinding zone of the grinding ring will continuously wear down and reduce in diameter in its own radial direction. Since each of the upper end face and the lower end face of the grinding ring is provided with the end face separation groove, two ends of a circumferential surface of the grinding ring will be detached due to wear. This can effectively avoid interference-type scratching and grinding on upper and lower end faces of a workpiece by the grinding ring, thereby ensuring the processing quality of the workpiece. Additionally, this grinding wheel does not need to be removed for correction during operation, so that the operation efficiency is significantly improved and the cost is reduced.

The present invention features a simple structure and reasonable design; and the grinding wheel requires no truing or rework and can be used until complete depletion, thereby greatly prolonging the service life of the grinding wheel and reducing the cost. The following problem can be effectively solved: for a powder metallurgy metal-bonded diamond profiled concave-type grinding wheel, a grinding zone will continuously wear down and reduce in diameter in its radial direction during use, forming a groove having the same thickness as a workpiece; and over time, upper and lower edges of this groove gradually cause interference-type scratching and grinding on upper and lower end faces of the workpiece, negatively affecting the edge grinding quality of the workpiece.

Based on the above technical solution, the present invention can also be improved as follows.

Further, a base is included, and the grinding ring fixedly sleeves a lower end of the base.

The beneficial effects of adopting the above further solution are that a simple structure and reasonable design are achieved, and the grinding ring of a grinding portion is mounted easily through the base.

Further, the grinding ring is integrally formed, and equidistantly provided with a plurality of radial separation grooves in its circumferential surface; and the plurality of radial separation grooves extends in the radial direction of the grinding ring, respectively.

The beneficial effects of adopting the above further solution are that a simple structure and reasonable design are achieved; and for the integrally formed grinding ring, by providing both the end face separation grooves and the radial separation grooves, the edge of the grinding ring can be detached smoothly during operation. This can effectively avoid interference-type scratching and grinding on upper and lower end faces of a workpiece by the grinding ring, thereby ensuring the processing quality of the workpiece.

Further, the base is internally provided with an annular cooling groove with an open upper end; and the grinding ring is equidistantly provided with a plurality of cooling holes, communicating with the cooling groove, in its circumferential surface along its circumferential direction.

The beneficial effects of adopting the above further solution are that during operation, cooling water in the cooling groove flows out from the plurality of cooling holes so as to cool the grinding wheel and the workpiece to ensure the processing quality of the workpiece.

Further, the grinding ring is formed by splicing a plurality of splicing pieces which are circumferentially distributed and tightly fitted in sequence.

The beneficial effects of adopting the above further solution are that a simple structure is achieved, the radial separation grooves are inherently formed, the reasonable design is achieved, and the processing cost is low.

Further, the base is internally provided with an annular cooling groove with an open upper end; and middle parts of opposite sides of two adjacent splicing pieces are recessed inwards respectively to form cooling holes communicating with the cooling groove.

The beneficial effects of adopting the above further solution are that during operation, cooling water in the cooling groove flows out from the plurality of cooling holes so as to cool the grinding wheel and the workpiece in an internal cooling mode to ensure the processing quality of the workpiece; and in this solution, the special structures of the plurality of splicing pieces themselves are utilized to form the plurality of cooling holes, so that the processing is more convenient.

Further, two protective covers are included. The two protective covers coaxially and fixedly sleeve the base, and are located at two ends of the grinding ring, respectively, and opposite sides of the two protective covers are bent toward each other to wrap an edge of the upper end face and an edge of the lower end face of the grinding ring, respectively.

The beneficial effects of adopting the above further solution are that during operation, the two protective covers can block and cushion the parts of the grinding ring that are detached from its upper and lower end faces due to grinding, respectively. This prevents the detached grinding ring fragments from bouncing away and causing accidental injuries to workers, thereby ensuring a safe and reliable operation.

Further, the grinding ring has chamfered, arc-shaped, semicircular, V-shaped, or duckbill concave structures on two sides of its circumferential surface.

The beneficial effects of adopting the above further solution are that a simple structure and reasonable design are achieved; and the above structure of the grinding ring can effectively match the upper end face and the lower end face of the workpiece to b etter process the workpiece.

Further, each of the upper end face and the lower end face of the grinding ring is provided with a plurality of end face separation grooves, and the plurality of end face separation grooves in the upper end face of the grinding ring and the plurality of end face separation grooves in the lower end face of the grinding ring are distributed equidistantly in the radial direction of the grinding ring respectively.

The beneficial effects of adopting the above further solution are that a simple structure and reasonable design are achieved, and it is ensured that the grinding wheel can be used without having to be removed for repair until complete depletion. This greatly improves the operation efficiency and prolongs its service life.

Further, each end face separation groove is of a helical structure.

The beneficial effects of adopting the above further solution are that a simple structure and reasonable design are achieved, and the edge of the grinding ring can be easily detached during grinding.

### BRIEF DESCRIPTION OF THE DRAWINGS

FIG. 1 is a structural schematic diagram of a first embodiment in the present invention;
FIG. 2 is an enlarged view of a portion A in FIG. 1;
FIG. 3 is a sectional view taken along the direction B-B in FIG. 1;
FIG. 4 is a structural schematic diagram of a second embodiment in the present invention;
FIG. 5 is a sectional view taken along the direction C-C in FIG. 4;
FIG. 6 is an enlarged view of a portion D in FIG. 4;
FIG. 7 is a structural schematic diagram of a third embodiment in the present invention;
FIG. 8 is a sectional view taken along the direction E-E in FIG. 7;
FIG. 9 is a structural schematic diagram of a fourth embodiment in the present invention; and
FIG. 10 is a sectional view taken along the direction F-F in FIG. 9.

In the accompanying drawings, components represented by reference numerals are listed as follows:
1. grinding ring; 2. end face separation groove; 3. radial separation groove; 4. cooling groove; 5. cooling hole; 6. splicing piece; 7. base; 8. protective cover; and 9. workpiece.

### DETAILED DESCRIPTION

It is to be noted that the embodiments and features in the embodiments of the present invention may be combined with each other without conflict.

In the description of the present invention, it is to be understood that the terms "center", "vertical", "lateral", "up", down", "front", "back", "left", "right", "vertical", "horizontal", "top", " bottom ", "inner", "outer", etc. indicate an orientation or positional relationship relationships shown based on the accompanying drawings are intended only to facilitate the description of the present invention and to simplify the description, and are not intended to indicate or imply that the device or element referred to must have a particular orientation, be constructed and operated in a particular orientation, and therefore are not to be construed as a limitation of the present invention. Furthermore, the terms "first", "second" and the like are used for descriptive purposes only, and are not to be understood as indicating or implying relative importance or implicitly specifying the number of technical features indicated. As a result, features defined as "first", "second" etc. may may expressly or implicitly include one or more of these features. In the description of the present invention, unless otherwise specified, "a plurality of" means two or more.

In the description of the invention, it is to be noted that, unless otherwise expressly specified and limited, the terms "mounted", "connected", "coupled" are to be understood in a broad sense, e.g., as a fixed connection, or as a detachable connection. For example, it may be a fixed connection, a removable connection, or a connection in one piece; it may be a mechanical connection or an electrical connection; it may be a direct connection or an indirect connection through an intermediate medium; and it may be a connection within the two elements. For those of ordinary skill in the art, the specific meanings of the above terms in the present invention can be understood by specific cases.

The present invention will be described in detail below with reference to the accompanying drawings and in connection with embodiments.

### Embodiment 1

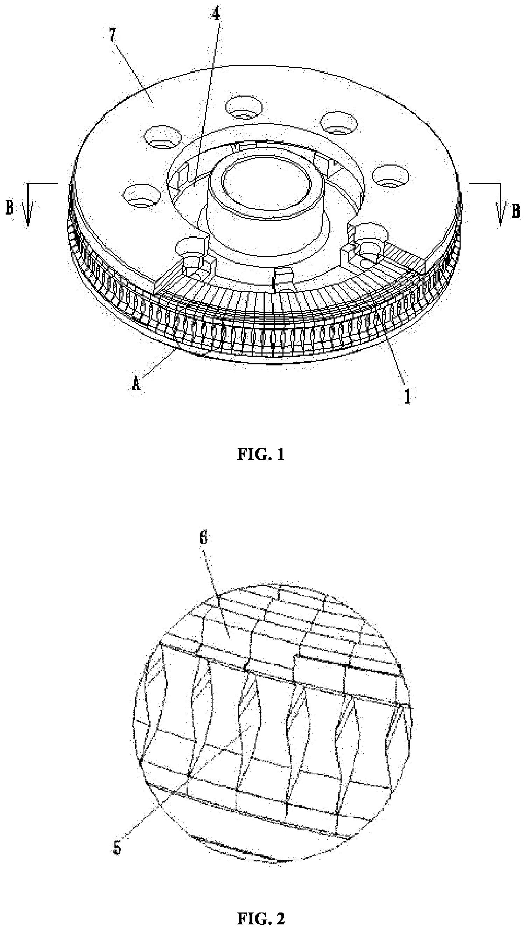

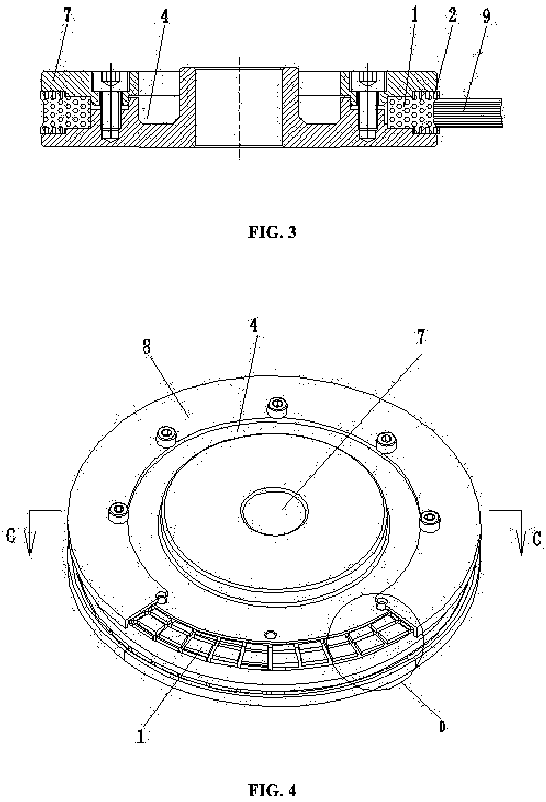

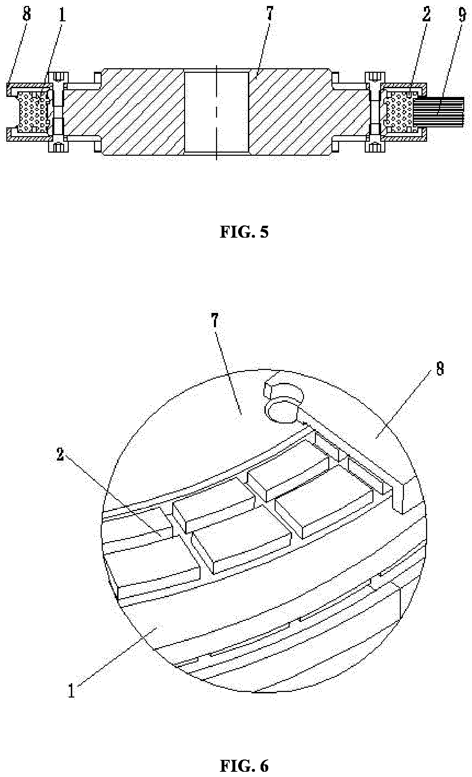

As shown in FIGs. 1 to 10, this embodiment provides a trimming-free diamond profiled grinding wheel, including a grinding ring 1. Each of an upper end face and a lower end face of the grinding ring 1 is provided with at least one end face separation groove 2, and each end face separation groove 2 extends along a circumferential direction of the grinding ring 1.

During operation, a grinding zone of the grinding ring 1 will continuously wear down and reduce in diameter along its own radial direction. Since each of the upper end face and the lower end face of the grinding ring 1 is provided with the end face separation groove 2, two ends of a circumferential surface of the grinding ring 1 will be detached due to wear. This can effectively avoid interference-type scratching and grinding on an upper end face and a lower end face of a workpiece 9 by the grinding ring 1, thereby ensuring the processing quality of the workpiece 9. Additionally, this grinding wheel does not need to be removed for correction during operation, so that the operation efficiency is significantly improved and the cost is reduced.

Preferably, in this embodiment, the grinding ring 1 adopts a composite annular structure.

Moreover, the grinding ring 1 is made of diamond and thus has better wear resistance.

This embodiment features a simple structure and reasonable design; the grinding wheel requires no truing or rework and can be used until complete depletion, thereby greatly prolonging the service life of the grinding wheel and reducing the cost. The following problem can be effectively solved: for a powder metallurgy metal-bonded diamond profiled concave-type grinding wheel, a grinding zone will continuously wear down and reduce in diameter in its radial direction during use, forming a groove having the same thickness as a workpiece 9; and over time, upper and lower edges of this groove gradually cause interference-type scratching and grinding on upper and lower end faces of the workpiece 9, negatively affecting the edge grinding quality of the workpiece 9.

### Embodiment 2

On the basis of Embodiment 1, in this embodiment, a base 7 is further included, and the grinding ring 1 fixedly sleeves a lower end of the base 7.

This solution features a simple structure and reasonable design, and the grinding ring 1 of a grinding portion can be easily mounted through the base 7.

Preferably, in this embodiment, the lower end of the base 7 is of a disc-shaped structure to facilitate mounting of the grinding ring 1.

Based on the above solution, during assembly, the center of an upper end of the base 7 is fixedly connected to a driving end of a driving member such as a motor, and the base 7 and the grinding ring 1 are driven to rotate by the motor.

### Embodiment 3

On the basis of Embodiment 2, in this embodiment, the grinding ring 1 is integrally formed, and equidistantly provided with a plurality of radial separation grooves 3 in its circumferential surface, and the radial separation grooves 3 extend in a radial direction of the grinding ring 1.

This solution features a simple structure and reasonable design. For the integrally formed grinding ring 1, by providing both the end face separation grooves 2 and the radial separation grooves 3, the edge of the grinding ring 1 can be detached smoothly during operation. This can effectively avoid interference-type scratching and grinding on the lower end face of the workpiece 9 by the grinding ring 1, thereby ensuring the processing quality of the workpiece 9.

Based on the above solution, since the grinding ring 1 is a whole, the base 7 is also a whole in this case.

### Embodiment 4

On the basis of embodiment 3, in this embodiment, the base 7 is internally provided with an annular cooling groove 4 with an open upper end; and the grinding ring 1 is equidistantly provided with a plurality of cooling holes 5, communicating with the cooling groove 4, in its circumferential surface along its circumferential direction.

During operation, cooling water in the cooling groove 4 flows out from the plurality of cooling holes 5 so as to cool the grinding wheel and the workpiece 9 to ensure the processing quality of the workpiece.

### Embodiment 5

On the basis of Embodiment 2, in this embodiment, the grinding ring 1 is formed by splicing a plurality of splicing pieces 6, and the splicing pieces 6 are circumferentially distributed and closely fitted together in sequence.

This solution features a simple structure, the radial separation grooves are inherently formed, the design is reasonable, and the processing cost is low.

Based on the above solution, since the grinding ring 1 is formed by splicing the plurality of splicing pieces 6, in order to facilitate mounting of the plurality of splicing pieces 6, the base 7 includes upper and lower parts, which clamp the plurality of splicing pieces 6 and are connected together by bolts.

Embodiment 3 and Embodiment 5 above are parallel solutions.

### Embodiment 6

On the basis of Embodiment 5, in this embodiment, the base 7 is internally provided with an annular cooling groove 4 with an open upper end; and middle parts of opposite sides of two adjacent splicing pieces 6 are recessed inwards respectively to form cooling holes 5 communicating with the cooling groove 4.

During operation, cooling water in the cooling groove 4 flows out from the plurality of cooling holes 5 so as to cool the grinding wheel and the workpiece 9 in an internal cooling mode to ensure the processing quality of the workpiece. In this solution, the special structures of the plurality of splicing pieces 6 themselves are utilized to form the plurality of cooling holes 5, so that the processing is more convenient.

### Embodiment 7

On the basis of the above embodiments, in the present embodiment, two protective covers 8 are further included. The two protective covers 8 coaxially and fixedly sleeve the base 7, and are located at two ends of the grinding ring 1 respectively; and opposite sides of the two protective covers 8 are bent toward each other to wrap an edge of the upper end face and an edge of the lower end face of the grinding ring 1 respectively.

During operation, the two protective covers 8 can block and cushion the parts of the grinding ring 1 that are detached from its upper and lower end faces due to grinding, respectively. This prevents the detached grinding ring fragments from bouncing away and causing accidental injuries to workers, thereby ensuring a safe and reliable operation.

Based on the above solution, during operation, the two ends of the circumference of the grinding ring 1 are gradually detached due to the radial separation grooves 3 and the end face separation grooves 2. If no protective cover 8 is provided, the detached grinding ring fragments will fly out. When the protective covers 8 are provided, the detached grinding ring fragments will first touch the protective cover 8. The protective cover 8 cushions the detached grinding ring fragments to avoid accidental injury to the workers, thereby ensuring a safe and reliable operation.

Preferably, in this embodiment, each of the above two protective covers 8 is of a disc-shaped structure matching the outer shape of the grinding ring 1.

### Embodiment 8

On the basis of the above embodiments, in this embodiment, the grinding ring 1 has chamfered, arc-shaped, semicircular, V-shaped, or duckbill concave structures on two sides of its circumferential surface.

This solution features a simple structure and reasonable design. The above structure of the grinding ring 1 can effectively match the upper end face and the lower end face of the workpiece 9 to better process the workpiece 9.

### Embodiment 9

On the basis of the above embodiments, in this embodiment, each of the upper end face and the lower end face of the grinding ring 1 is provided with a plurality of end face separation grooves 2, and the plurality of end face separation grooves 2 in the upper end face of the grinding ring 1 and the plurality of end face separation grooves 2 in the lower end face of the grinding ring 1 are distributed equidistantly on edges of the end faces of the grinding ring 1 along the radial direction of the grinding ring respectively.

This solution features a simple structure and reasonable design, and ensures that the grinding wheel can be used without having to be removed for repair until complete depletion. This greatly improves the operation efficiency and prolongs its service life.

### Embodiment 10

On the basis of the above embodiments, in this embodiment, each end face separation groove 2 is of a helical structure.

The solution features a simple structure and reasonable design, so that the edge of the grinding ring can be easily detached during grinding.

The pitch of the end face separation groove 2 can be designed according to requirements.

The bases for determining the pitch of the helical separation groove are as follows. First, safety factors, when the grinding wheel is used in a closed area, a larger value of the pitch can be appropriately used; and when the grinding wheel is used in an open area, potential risks caused by the detachment of residual fragments from the upper and lower edges of the grooves of the grinding wheel under a centrifugal force should be considered, and the pitch is minimized to reduce the mass of residual fragments, thereby lowering the danger; or a protective guard (retaining ring) is used. Second, the higher the quality requirement is, the smaller the pitch is.

The radial separation grooves and the helical separation grooves on the upper and lower end faces of the grinding ring 1 have groove bottom distances that are less than or equal to the thickness of the workpiece.

The working principle of the present invention is as follows.

The workpiece 9 to be processed is fixed in a manner that can be thought of by a person skilled in the art, and in addition, the edge of the workpiece 9 fits the circumference of the grinding ring 1 of the grinding wheel; and then, the entire grinding wheel is driven to rotate by a driving member to grind the workpiece 9.

During this process, due to the structural particularity of the grinding ring 1, that is, the grinding ring 1 is provided with both end face separation grooves 2 and radial separation grooves 3, parts of the grinding ring can be detached during grinding, thereby avoiding interference-type scratching and grinding on the upper and lower end faces of the workpiece 9 by the grinding ring 1 and ensuring the processing quality of the workpiece 9.

The present invention solves the problem that for a powder metallurgy metal-bonded diamond profiled concave-type grinding wheel, a grinding zone will continuously wear down and reduce in diameter in its radial direction during use, forming a groove having the same thickness as a workpiece; and over time, upper and lower edges of this groove gradually cause interference-type scratching and grinding on upper and lower end faces of the workpiece, negatively affecting the edge grinding quality of the workpiece. The grinding wheel requires no truing or rework and can be used until complete depletion, thereby greatly prolonging the service life of the grinding wheel of the user lacking truing capabilities, and reducing the tooling cost by several times. For a multi-wheel device, this design completely eliminates the need for repair, wheel replacement or machine adjustment, thereby increasing the device utilization rate and reducing labor costs.

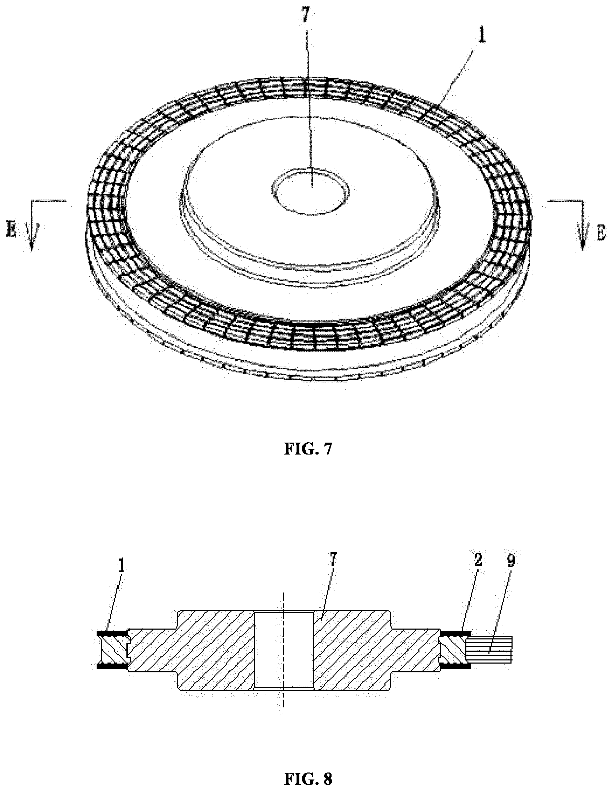

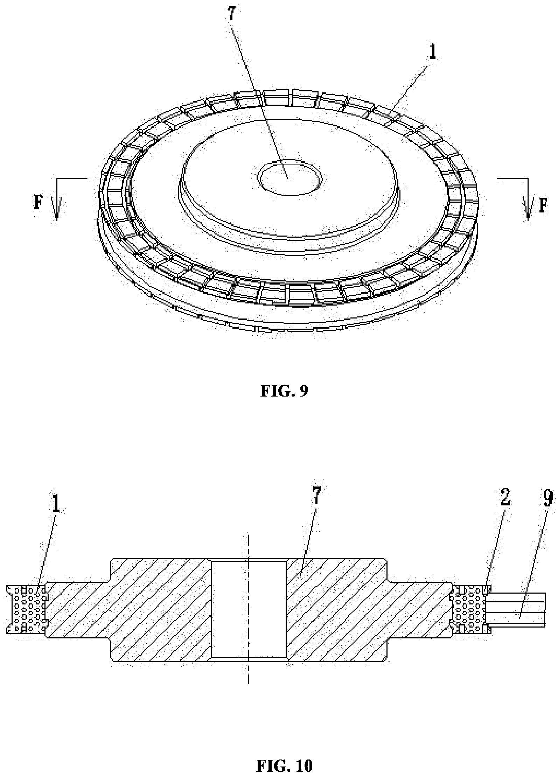

FIGs. 7 and 8 are embodiments in which the end face separation grooves 2 are small-pitch helical grooves, and FIGs. 9 and 10 are embodiments in which the end face separation grooves 2 are large-pitch helical grooves.

It is apparent to those skilled in the art that the present invention is not limited to the details of the above exemplary embodiments, and that it is capable of being realized in other specific forms without departing from the spirit or essential features of the present invention. Accordingly, the embodiments are to be regarded as exemplary and non-limiting in every point of view, and the scope of the present invention is limited by the appended claims and not by the foregoing description, and is therefore intended to encompass all variations falling within the meaning and scope of the equivalent elements of the claims. Any reference signs in the claims should not be regarded as limiting the claims to which they relate.

In addition, it should be understood that although the present specification is described in accordance with the embodiments, not each embodiment contains only one independent technical solution, and the specification is recited in such a manner only for the sake of clarity. A person skilled in the art should take the specification as a whole, and the technical solutions in the various embodiments may be combined appropriately to form other embodiments that can be understood by a person skilled in the art.

The above are only preferred embodiments of the present invention, and are not intended to limit the present invention. Any modification, equivalent replacement, improvement, etc. made within the spirit and principles of the present invention should be included in the scope of protection of the present invention.

## Claims

1. A trimming-free diamond profiled grinding wheel, **characterized by** comprising: a grinding ring (1), wherein each of an upper end face and a lower end face of the grinding ring (1) is provided with at least one end face separation groove (2), and each end face separation groove (2) extends in a circumferential direction of the grinding ring (1).

2. The trimming-free diamond profiled grinding wheel according to claim 1, **characterized by** further comprising a base (7), wherein the grinding ring (1) fixedly sleeves a lower end of the base (7).

3. The trimming-free diamond profiled grinding wheel according to claim 2, **characterized in that** the grinding ring (1) is integrally formed, and equidistantly provided with a plurality of radial separation grooves (3) in its circumferential surface, and each of the plurality of radial separation grooves (3) extends in a radial direction of the grinding ring (1).

4. The trimming-free diamond profiled grinding wheel according to claim 3, **characterized in that** the base (7) is internally provided with an annular cooling groove (4) with an open upper end and the grinding ring (1) is equidistantly provided with a plurality of cooling holes (5), communicating with the cooling groove (4), in its circumferential surface in its circumferential direction.

5. The trimming-free diamond profiled grinding wheel according to claim 2, **characterized in that** the grinding ring (1) is formed by splicing a plurality of splicing pieces (6), and the splicing pieces (6) are circumferentially distributed and closely fitted together in sequence.

6. The trimming-free diamond profiled grinding wheel according to claim 5, **characterized in that** the base (7) is internally provided with an annular cooling groove (4) with an open upper end; and middle parts of opposite sides of two adjacent splicing pieces (6) are recessed inwards respectively to form cooling holes (5) communicating with the cooling groove (4).

7. The trimming-free diamond profiled grinding wheel according to any one of claims 1 to 6, **characterized by** further comprising two protective covers (8), wherein the two protective covers (8) coaxially and fixedly sleeve the base (7) and are located at two ends of the grinding ring (1) respectively, and opposite sides of the two protective covers (8) are bent toward each other to wrap an edge of the upper end face and an edge of the lower end face of the grinding ring (1) respectively.

8. The trimming-free diamond profiled grinding wheel according to any one of claims 1 to 5, **characterized in that** the grinding ring (1) has chamfered, arc-shaped, semicircular, V-shaped, or duckbill concave structures on two sides of its circumferential surface.

9. The trimming-free diamond profiled grinding wheel according to any one of claims 1 to 5, **characterized in that** each of the upper end face and the lower end face of the grinding ring (1) is provided with a plurality of end face separation grooves (2), and the plurality of end face separation grooves (2) in the upper end face of the grinding ring (1) and the plurality of end face separation grooves (2) in the lower end face of the grinding ring (1) are distributed equidistantly along the radial direction of the grinding ring respectively.

10. The trimming-free diamond profiled grinding wheel according to claim 1 to 5, **characterized in that** each of the end face separation grooves (2) is of a helical structure.
